# EUROPEAN PATENT SPECIFICATION

(11) **EP 3 567 668 B1**
(45) Date of publication and mention of the grant of the patent: **17.01.2024**
(21) Application number: 19158228.7
(22) Date of filing: 20.02.2019
(51) Int. Cl.: H01M 10/0525, H01M 10/0569

(54) **NON-AQUEOUS ELECTROLYTE FOR SECONDARY BATTERY AND SECONDARY BATTERY HAVING THE SAME**
WASSERFREIER ELEKTROLYT FÜR SEKUNDÄRBATTERIE UND SEKUNDÄRBATTERIE DAMIT
ÉLECTROLYTE NON AQUEUX POUR BATTERIE SECONDAIRE ET BATTERIE SECONDAIRE LE COMPRENANT

(30) Priority: 20.02.2018 JP 2018028126; 09.08.2018 KR 20180093240
(43) Date of publication of application: 13.11.2019
(73) Proprietor: Samsung SDI Co., Ltd., Gyeonggi-do 17084 (KR)
(72) Inventor: Yamamoto, Hidekazu, Yokohama-shi, Kanagawa-ken (JP); Mizumo, Tomonobu, Yokohama-shi, Kanagawa-ken (JP); Kawase, Kenichi, Yokohama-shi, Kanagawa-ken (JP)
(74) Representative: Gulde & Partner

(56) References cited:
- EP-A2- 1 176 658
- WO-A1-2018/160209
- US-A1- 2006 194 118
- US-A1- 2017 214 091
- US-B1- 6 855 458

## Description

### BACKGROUND OF THE INVENTION

### (a) Field of the Invention

The present invention relates to an electrolyte for a non-aqueous electrolyte secondary battery and a non-aqueous electrolyte secondary battery.

### (b) Description of the Related Art

A non-aqueous electrolyte secondary battery such as a lithium ion secondary battery is widely used as a power source for portable devices such as a notebook PC (note PC) and a mobile phone. In addition, the lithium ion secondary battery has drawn attention as a power source suitable for xEV such as an electric vehicle and a hybrid electric vehicle. Herein, a lithium ion secondary battery suitable for xEV requires a high capacity and a long cycle-life because of the necessity of ensuring performance equivalent to that of a conventional gasoline engine automobile. Also, a lithium ion secondary battery suitable for xEV is required to have rapid charging characteristics (high-rate charging/discharging) for completing charging within a time equivalent to a fueling time of gasoline engine cars.

US 2017/0214091 A1 relates to a nonaqueous electrolytic solution that can improve electrochemical properties at high temperatures and an energy storage device using the same. US 2006/0194118 A1 relates to an electrolyte for a lithium battery which can improve battery safety and a lithium battery comprising the same. EP 1 176 658 A2 relates to an electrolyte for a lithium-sulfur battery prepared by mixing at least two solvents with different sulfur solubilities, and another solvent with a high dielectric constant and a high viscosity, and a lithium-sulfur battery using the same. US 6,855,458 B1 relates to non-aqueous electrolyte compositions for secondary lithium cells.

### SUMMARY OF THE INVENTION

Recently, a new performance improvement of a non-aqueous electrolyte secondary battery has been demanded, and as a result, it has been studied to increase an electrolytic salt concentration in the electrolyte. There are disclosures of increase of a concentration of a lithium salt such as in Japanese Patent Laid-Open Publication No. 2014-241198 and Wang J, et al.,

Superconcentrated electrolytes for a high-voltage lithium-ion battery. -i , Nature Communications, 2016, 7th, 12032 as a method of increasing a lithium salt concentration, there is a method of coordinating most of solvents of the electrolyte with ions. That is, a concentration of a free solvent (a solvent that does not coordinate with ions of the electrolyte) may be reduced. As a result, the electrochemical stability of the electrolyte may be improved. However, if an electrolytic salt concentration is simply increased, viscosity of the electrolyte is increased and thus cycle-life may be deteriorated. Accordingly, the present invention provides an electrolyte for a non-aqueous electrolyte secondary battery and a lithium ion secondary battery in which viscosity of the electrolyte is decreased while maintaining a concentration of a free solvent of the electrolyte at a low level.

An embodiment provides an electrolyte for a non-aqueous electrolyte secondary battery according to claim 1. The electrolyte includes an electrolytic salt, a first solvent, and a second solvent, wherein the electrolytic salt is included at a concentration of about 0.5 M (mol/L) to about 3.8 M (mol/L) in an electrolyte, the first solvent has a solubility of the electrolytic salt ranging from about 100 g to about 400 g, the second solvent has a solubility of the electrolytic salt of less than or equal to about 1 g, the first solvent includes a coordination solvent coordinated with an ionized ion from the electrolyte salt and a free solvent that is not coordinated with an ionized ion from the electrolyte salt, and a peak area ratio of the free solvent determined by a Raman spectrum is less than about 20 %.

The peak area ratio of the free solvent is a ratio of a peak area of the free solvent relative to a total area of a peak area of the free solvent and a peak area of the coordination solvent determined by the Raman spectrum, and the peak area is an area surrounded by a peak separated by peak separation treatment and a predetermined baseline.

The electrolytic salt may be included at a concentration of about 1.7 M (mol/L) to about 3.0 M (mol/L) in an electrolyte.

The electrolytic salt includes a lithium salt.

The first solvent includes at least one of dimethyl carbonate (DMC), ethyl acetate (EA), methyl propionate (MP), and methyl acetate (MA).

The second solvent includes at least one of trifluorotoluene (CF₃Ph) and fluorobenzene (FB).

The free solvent may have a peak area ratio of greater than or equal to about 1 %.

Another embodiment provides a non-aqueous electrolyte secondary battery including the electrolyte for a non-aqueous electrolyte secondary battery.

According to the present invention, viscosity of the electrolyte may be lowered while a concentration of the free solvent of the electrolyte is maintained to be low.

### BRIEF DESCRIPTION OF THE DRAWINGS

FIG. 1 is a cross sectional side view showing a configuration of a lithium ion secondary battery.
FIGS. 2A and 2B are views for explaining a configuration of an electrolyte for a non-aqueous electrolyte secondary battery according to an embodiment.
FIG. 3 is a graph showing Raman spectra of the electrolytes according to Examples.

### DETAILED DESCRIPTION OF THE EMBODIMENTS

Desirable embodiments of the present invention will be described in detail with reference to the accompanying drawings. In the description and drawings, constituent elements having substantially the same functional constitution are denoted by the same reference numerals, and redundant description is omitted.

### < Configuration of Lithium Ion Secondary Battery >

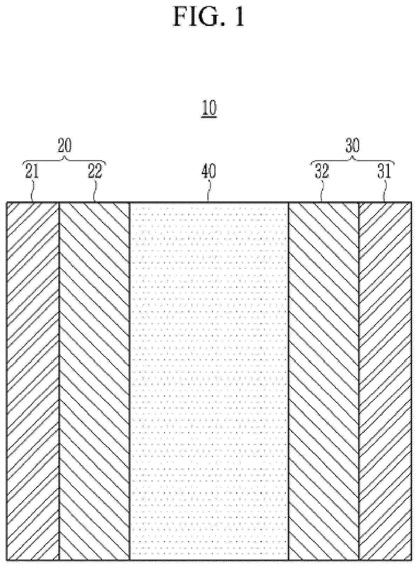

Referring to FIG. 1, a configuration of a lithium ion secondary battery 10 according to an embodiment of the present invention is described.

The lithium ion secondary battery 10 includes a positive electrode 20, a negative electrode 30, a separator 40, and a poor solvent-containing electrolyte. The lithium ion secondary battery 10 has a charge-reaching voltage (an oxidation reduction potential) of for example greater than or equal to about 4.0 V (vs.Li/Li+) and less than or equal to about 5.0 V, particularly greater than or equal to about 4.2 V and less than or equal to about 5.0 V. The shape of the lithium ion secondary battery 10 is not particularly limited, and specifically the lithium ion secondary battery 10 may have any cylindrical, prismatic, laminate-type, or button-type shape. The poor solvent-containing electrolyte may include electrolytic salt having a concentration of greater than or equal to about 0.5 M (mol/L) and less than or equal to about 3.8 M (mol/L) in the electrolyte, and a first solvent and a second solvent. The first solvent has a solubility with respect to the electrolytic salt of greater than or equal to about 100 g at 25 °C and the second solvent has a solubility with respect to the electrolytic salt of less than or equal to about 1 g at 25 °C. Details will be described later.

### (Positive Electrode)

The positive electrode 20 includes a current collector 21 and a positive active material layer 22.

The positive current collector 21 may use any conductor without particular limit. For example, it may include at least one of aluminum, stainless steel and nickel plated (nickel coated) steel.

The positive active material layer 22 may include a positive active material, and may further include a conductive agent, a binder for a positive electrode or combination thereof.

The positive active material may be, for example lithium-containing solid solution oxide, and may be any material that can electrochemically intercalate and deintercalate lithium ions without particular limitation. The solid solution oxide may be, for example, LiₐMnₓCo_{y}Ni_{z}O₂ (1.150 ≤ a ≤ 1.430, 0.45 ≤ x ≤ 0.6, 0.10 ≤ y ≤ 0.15, 0.20 ≤ z ≤ 0.28), LiMnₓCo_{y}Ni_{z}O₂ (0.3 ≤ x ≤ 0.85, 0.10 ≤ y ≤ 0.3, 0.10 ≤ z ≤ 0.3), or LiMn_{1.5}Ni_{0.5}O₄.

The conductive agent may include, for example, at least one of carbon black such as ketjen black, acetylene black, and the like, natural graphite, artificial graphite, carbon nanotubes, graphene, fiber-type carbons such as carbon nanofibers, and the like and a composite of the fiber-type carbons and the carbon black. The conductive agent is not particularly limited as long as it increases conductivity of the positive electrode.

The binder for the positive electrode may be, for example, polyvinylidene fluoride, ethylene-propylene-diene terpolymer, a styrene butadiene rubber, an acrylonitrile butadiene rubber, a fluororubber, polyvinyl acetate, polymethyl methacrylate, polyethylene), nitrocellulose, and the like. The binder is not particularly limited, as long as it binds the positive active material and the conductive agent with the positive current collector 21.

The positive active material layer 22 is manufactured, for example, in the following method. First, a positive electrode mixture is manufactured by dry-mixing the positive active material, the conductive agent, and the binder for the positive electrode. Subsequently, the positive electrode mixture is dispersed in an appropriate organic solvent to form positive electrode mixture slurry, and the positive electrode mixture slurry is coated on the positive current collector 21, dried, and compressed to form a positive active material layer.

### (Negative Electrode)

The negative electrode 30 includes a negative current collector 31 and a negative active material layer 32.

The negative current collector 31 may use any conductor without particular limit. The negative current collector 31 may include, for example, at least one of aluminum, stainless steel, nickel plated steel (nickel coated), and the like.

The negative active material layer 32 may include a conductive agent and a binder in addition to at least negative active material. An amount ratio of the negative active material, the conductive agent, and the binder is not particularly limited, and may be any amount ratio that may be used in a general lithium ion secondary battery.

The negative active material may be for example, a graphite-based active material, a silicon (Si) or tin (Sn)-based active material, a titanium oxide (TiOₓ) active material, and the like. The negative electrode active material is not particularly limited as long as it is a material capable of electrochemically intercalating and deintercalating lithium ions. The graphite-based active material may be artificial graphite, natural graphite, a mixture of artificial graphite and natural graphite, or natural graphite coated with artificial graphite. The silicon or tin-based active material may be fine particulates of silicon or tin, fine particulates of an oxide of silicon or tin, an alloy of silicon or tin, and the like. The titanium oxide active material may be Li₄Ti₅O₁₂, and the like. In addition, the negative active material may be metal lithium (Li).

The conductive agent may be the same as the conductive agent used in the positive active material layer 22.

The binder for the negative electrode may be, for example, polyvinylidene difluoride, an ethylenepropylene diene terpolymer, a styrene-butadiene rubber (SBR), an acrylonitrile-butadiene rubber, a fluororubber, polyvinyl acetate, polymethyl methacrylate, polyethylene, nitrocellulose, and the like. On the other hand, the binder for the negative electrode is not particularly limited as long as it binds the negative active material and the conductive agent on the negative current collector 31. In addition, an amount of the binder for the negative electrode is not particularly limited and may be any amount that is applied to a negative active material layer of a lithium ion secondary battery.

### (Separator)

The separator 40 is not particularly limited and may be any separator in a lithium ion secondary battery.

The separator 40 may include a porous layer or a non-woven fabric having excellent high-rate discharge performance, which may be used alone or in a mixture thereof. The resin of the separator 40 may be for example a polyolefin-based resin such as polyethylene or polypropylene, a polyester-based resin such as polyethylene terephthalate or polybutylene terephthalate, polyvinylidene fluoride (PVDF), a vinylidene fluoride (VDF)-hexafluoro propylene (HFP) copolymer, a vinylidene fluoride-perfluorovinylether copolymer, a vinylidene fluoride-tetrafluoroethylene copolymer, a vinylidene fluoride-trifluoro ethylene copolymer, a vinylidene fluoride-fluoroethylene copolymer, a vinylidene fluoride-hexafluoro acetone copolymer, a vinylidene fluoride-ethylene copolymer, a vinylidene fluoride-propylene copolymer, a vinylidene fluoride-trifluoro propylene copolymer, a vinylidene fluoride-tetrafluoroethylene-hexafluoro propylene copolymer, a vinylidene fluoride-ethylene-tetrafluoroethylene copolymer, and the like.

### (Poor Solvent-Containing Electrolyte)

Next, the poor solvent-containing electrolyte (an electrolyte for a non-aqueous electrolyte secondary battery) according to the present embodiment is described. The poor solvent-containing electrolyte includes an electrolytic salt having a concentration of about 0.5 M (mol/L) to about 3.8 M (mol/L) in the electrolyte, a first solvent, and a second solvent. The first solvent has a solubility with respect to the electrolytic salt of greater than or equal to about 100 g at 25 °C and the second solvent has a solubility with respect to the electrolytic salt of less than or equal to about 1 g at 25 °C. The solubility refers to a weight of the electrolytic salt dissolved in 100 g of the solvent. Therefore, the first solvent is a good solvent with respect to the electrolytic salt and the second solvent is a poor solvent with respect to electrolytic salt.

On the other hand, the upper limit of the solubility with respect to the electrolyte salt of the first solvent at 25 ° C is not particularly limited, and may be, for example, 400 g. In addition, the lower limit of the solubility with respect to the electrolyte salt of the second solvent at 25 °C is not particularly limited but may be, for example, 0 g.

The first solvent may be classified into a coordination solvent coordinated with ionized ions (e.g., lithium ions) from the electrolytic salt and a free solvent that is not coordinated with an ionized ion from the electrolyte salt.

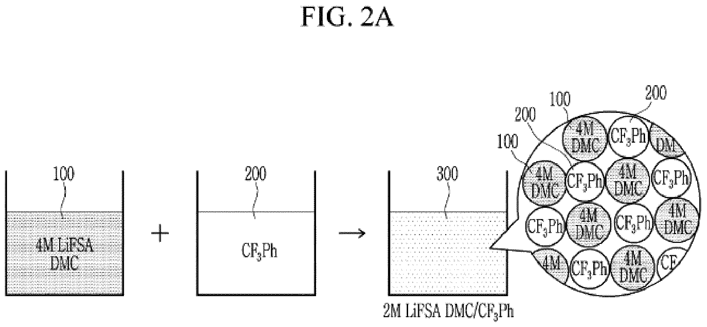

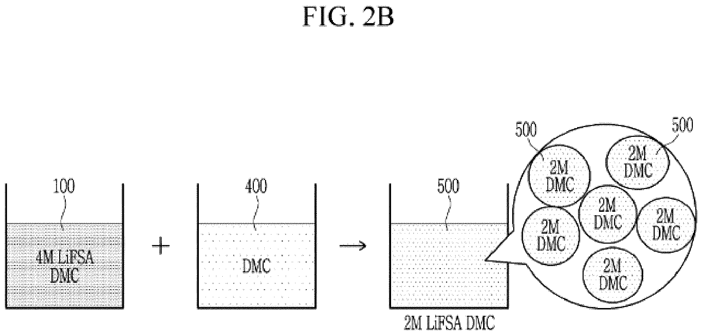

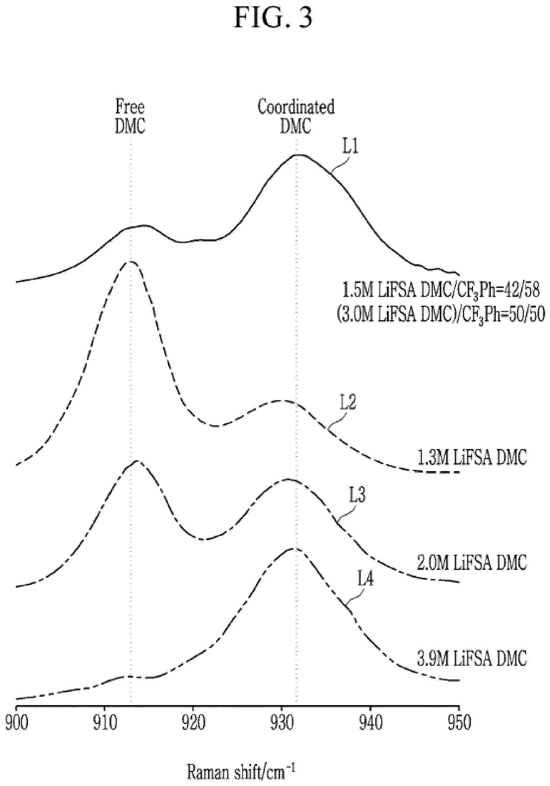

Referring to FIGS. 2A, 2B, and 3, the poor solvent-containing electrolyte according to the present embodiment is described in detail. As described above, in order to improve performance of the lithium ion secondary battery 10, an electrolyte salt concentration of the electrolyte may be increased. Thus, a free solvent concentration of the electrolyte may be decreased, and the electrochemical stability of the electrolyte may be improved. However, when the electrolyte salt concentration is simply increased, viscosity of the electrolyte may be increased, and thus the cycle-life may be reduced.

Accordingly, as a result of studying a technique capable of reducing the viscosity of the electrolyte while reducing the free solvent concentration of the electrolyte, it has been proposed that a poor solvent (i.e., a second solvent) is injected into the electrolyte in which the electrolyte salt is dissolved at a high concentration. An embodiment is illustrated in FIG. 2A. The electrolyte 100 of FIG. 2A includes LiFSA dissolved in dimethyl carbonate (DMC) at a concentration of 4 M (mol/L). The LiFSA is an electrolytic salt and the dimethyl carbonate is good solvent (i.e., first solvent). The second solvent 200 is trifluorotoluene (CF₃Ph). A poor solvent-containing electrolyte 300 is produced by pouring the second solvent 200 into the electrolyte 100. The amount of the second solvent 200 relative the electrolyte 100 may be 50:50 (a volume ratio). Thus, an apparent LiFSA concentration may be 2 M (mol / L) (i.e., based on a total amount of the poor solvent-containing electrolyte 300).

However, the second solvent 200 is not dissolved in the electrolyte 100 and is dispersed therein in the poor solvent-containing electrolyte 300. Therefore, the LiFSA is still at a high concentration (i.e., 4 M (mol/L)) in the electrolyte 100. In other words, the free solvent concentration is hardly changed in the electrolyte 100. The poor solvent-containing electrolyte 300 includes the second solvent 200 in which the electrolytic salt is hardly dissolved, the viscosity may be reduced. On the other hand, even if the poor solvent-containing electrolyte 300 is allowed to stand for 24 hours, a phenomenon such as phase separation does not occur. Therefore, it is considered that the poor solvent-containing electrolyte 300 maintains a uniform state.

On the other hand, as shown in FIG. 2B, when a good solvent 400 (herein, dimethyl carbonate) is added to the electrolyte 100, a low concentration electrolyte 500 having an electrolyte concentration diluted into 2 M (mol/L) may be produced. In this example, an injection amount of the good solvent 400 is set to 50:50 (volume ratio) with respect to the electrolyte 100. In this case, the viscosity of the electrolyte decreases and the free solvent concentration also decreases.

The free solvent concentration of the electrolyte may be determined by a Raman spectrum. Referring to FIG. 3, a method of determining the free solvent concentration by the Raman spectrum is described.

Graph L1 illustrates a Raman spectrum of the poor solvent-containing electrolyte according to the present embodiment. Graph L1 illustrates Raman spectra of an electrolyte (3.0 M (mol/L) LiFSA DMC) in which LiFSA is dissolved in a first solvent (dimethyl carbonate) at a concentration of 3.0 M (mol/L) and a poor solvent-containing electrolyte in which the electrolyte and a second solvent are mixed in 50:50 (volume ratio). Therefore, the electrolytic salt is LiFSA, the first solvent is dimethyl carbonate, and the second solvent is trifluorotoluene, and as a result, in the poor solvent-containing electrolyte, an apparent concentration of LiFSA (i.e., a concentration based on a total amount of the poor solvent-containing electrolyte) becomes to be 1.5 M (mol/L), and the dimethyl carbonate and the trifluorotoluene becomes to be mixed at 42:58 (volume ratio).

Graph L2 illustrates a Raman spectrum of an electrolyte in which LiFSA is dissolved in a first solvent (dimethyl carbonate) at a concentration of 1.3 M (mol/L).

Graph L3 illustrates a Raman spectrum of an electrolyte in which LiFSA is dissolved in dimethyl carbonate at a concentration of 2 M (mol/L).

Graph L4 illustrates a Raman spectrum of an electrolyte in which LiFSA is dissolved in dimethyl carbonate at a concentration of 3.9 M (mol/L).

When the first solvent is dimethyl carbonate, a peak based on an O-CH₃ stretching vibration of the dimethyl carbonate molecule is observed at different positions depending on a state of the dimethyl carbonate. Based on Non-Patent Document 1, the peak of the free solvent is defined as 913 cm⁻¹ and the peak of the coordination solvent is defined as 930 cm⁻¹ to 935 cm⁻¹. In addition, a minute peak corresponding to trifluorotoluene is observed at 920 cm⁻¹. Therefore, the intensity of the separated peak may be specified by separating the peak of the Raman spectrum. For example, as the free solvent concentration is low, the peak intensity corresponding to the free solvent becomes small.

Since electrolytes of Graphs L2 and L3 include LiFSA at a low concentration, many free solvents exist in the electrolyte besides the coordination solvent. Therefore, in Graphs L2 and L3, both the peak corresponding to the coordination solvent and the peak corresponding to the free solvent are detected, and a peak intensity corresponding to the free solvent increases.

On the other hand, an electrolyte of Graph L4 includes LiFSA at a high concentration, and thus, most of the solvent of the electrolyte is a coordination solvent and a free solvent is hardly present. Therefore, in Graph L4, a peak intensity with respect to the coordination solvent is extremely large, but a peak intensity with respect to the free solvent is extremely small. On the other hand, at first glance, the peak intensity with respect to the free solvent is not observed, but when the peak is separated, the peak with respect to the free solvent may be microscopically observed. According to Graphs L2 to L4, as the concentration of the electrolyte salt increases, the peak intensity of the free solvent decreases, that is, the concentration of the free solvent decreases.

Graph L1 is between Graph L2 (a LiFSA concentration of 1.3 M) and the Graph L3 (a LiFSA concentration of 2.0 M) because the apparent concentration of LiFSA is 1.5 M (mol/L). Therefore, it is expected that a peak intensity with respect to the free solvent will be a value between Graph L2 and Graph L3, but actually it is similar to Graph L4 and different from Graph L2 and Graph L3. Specifically, since the electrolyte 100 is separated from the second solvent 200 in the poor solvent-containing electrolyte, as described above, LiFSA is present at a high concentration in the electrolyte 100, while the free solvent is present at a low concentration, and accordingly, Graph L1 has a close shape to that of Graph L4. Resultantly, peak intensity with respect to the coordination solvent is very strong, but peak intensity with respect to the free solvent is extremely weak. On the other hand, at first glance, the peak intensity with respect to the free solvent is not observed, but peaks with respect to the free solvent may be observed if the peaks are separated.

In this way, the peak intensity with respect to the free solvent becomes as much weak as the free solvent has a low concentration. Therefore, in the present embodiment, the concentration of the free solvent is determined according to the peak area ratio of the free solvent. In other words, a peak area of the free solvent and a peak area of the coordination solvent which are determined by a Raman spectrum are calculated. The peak area refers to an area surrounded by a peak separated by peak separation treatment and a predetermined baseline. Then, a ratio of a peak area of the free solvent relative to a total area of a peak area of the free solvent and a peak area of the coordination solvent determined by the Raman spectrum is calculated.

The free solvent may have a peak area ratio of less than about 20 %. Specifically, the free solvent may have a peak area ratio of less than or equal to about 15 %. More specifically, the free solvent may have a peak area ratio of less than or equal to about 10 %. Herein, the concentration of the free solvent becomes very low, and accordingly, electrochemical stability of the electrolyte may be improved. In addition, since the second solvent 200 is added to the electrolyte 100 in the present embodiment, viscosity becomes low, and furthermore, a cycle-life of the lithium ion secondary battery 10 may be improved. The peak area ratio of the free solvent is not particularly limited but may be greater than or equal to about 1 %, for example, greater than or equal to about 3 %.

Next, a specific composition of the poor solvent-containing electrolyte according to the present embodiment is explained. The electrolytic salt may be any electrolytic salt used in a conventional lithium ion battery without particular limit. For example, it may be an inorganic ion salt including at least one of lithium (Li), sodium (Na) or potassium (K) such as LiN(SO₂F)₂ (lithium bisfluoro sulfonyl amide, LiFSA), lithium bisfluoro sulfonyl imide (LiFSI), LiClO₄, LiBF₄, LiAsF₆, LiPF₆, LiPF₆₋ₓ(CnF₂ₙ₊₁)ₓ [wherein, 1 < x <6, and n = 1 or 2], LiSCN, LiBr, Lil, Li₂SO₄, Li₂B₁₀Cl₁₀, NaClO₄, Nal, NaSCN, NaBr, KClO₄, KSCN, and/or the like, and/or an organic ion salt such as LiCF₃SO₃, LiN(CF₃SO₂)₂, LiN(C₂F₅SO₂)₂, LiN(CF₃SO₂)(C₄F₉SO₂), LiC(CF₃SO₂)₃, LiC(C₂F₅SO₂)₃, Li(CH₃)₄NBF₄, Li(CH₃)₄NBr, Li(C₂H₅)₄NClO₄, Li(C₂H₅)₄NI, Li(C₃H₇)₄NBr, Li(n-C₄H₉)₄NClO₄, Li(n-C₄H₉)₄NI, Li(C₂H₅)₄N-maleate, Li(C₂H₅)₄N-benzoate, Li(C₂H₅)₄N-phthalate, lithium stearyl sulfonate, lithium octyl sulfonate, lithium dodecyl benzenesulfonate, and the like. Such an ion salt or ionic compound may be used alone or in a mixture of two or more. The electrolytic salt may include a lithium salt.

The concentration of the electrolytic salt may be about 0.5 M (mol/L) to about 3.8 M (mol/L), for example about 1.7 M (mol/L) to about 3.0 M (mol/L), or about 1.9 M (mol/L) to about 2.7 M (mol/L). The electrolytic salt concentration is an electrolytic salt concentration with respect to an entire of the poor solvent-containing electrolyte. That is, the electrolyte 100 is dispersed in in the poor solvent-containing electrolyte and the electrolytic salt is present at a higher concentration in the electrolyte 100. Therefore, the free solvent concentration becomes to be lowered.

The first solvent is a good solvent with respect to the electrolytic salt and may have a solubility with respect to the electrolytic salt of greater than or equal to about 100 g at 25 °C, specifically 100 g to 400g at 25 °C. The first solvent includes at least one of dimethyl carbonate (DMC), ethyl acetate (EA), methyl propionate (MP), and methyl acetate (MA). On the other hand, dimethyl carbonate, ethyl acetate, methyl propionate, and methyl acetate have each solubility of 189 g, 163 g, 163 g, and 194 g with respect to LiFSA at 25 °C and thus may satisfy a requirement of the first solvent.

The second solvent is a poor solvent with respect to the electrolytic salt and may have solubility with respect to the electrolytic salt of less than or equal to about 1 g at 25 °C. The second solvent may be desirably dispersed in the electrolyte and includes at least one of trifluorotoluene (CF₃Ph) and fluorobenzene (FB). Both the trifluorotoluene (CF₃Ph) and fluorobenzene (FB) may have solubility of less than or equal to about 0.2 g with respect to LiFSA at 25 °C. Accordingly, these compounds satisfy a requirement of the second solvent.

On the other hand, the poor solvent-containing electrolyte may include various additives. The additives may include a negative electrode-acting additive, a positive electrode-acting additive, an ester-based additive, a carbonate ester-based additive, a sulfuric acid ester-based additive, a phosphoric acid ester-based additive, a boric acid ester-based additive, an acid anhydride additive, an electrolytic additive, and the like. The additives may be used alone or in a mixture of two or more, a mixing ratio in the case of using a mixture of two or more may be appropriately adjusted according to a desired battery performance, which may be widely understood by those skilled in the art.

### <Method of Manufacturing Lithium Ion Secondary Battery>

A method of manufacturing the lithium ion secondary battery 10 is described.

The positive electrode 20 is manufactured as follows. First, a mixture of a positive active material, a conductive agent, and a binder for a positive electrode are dispersed in a solvent (for example, N-methyl-2-pyrrolidone) to prepare slurry. Subsequently, the slurry is coated on a positive current collector 21 and dried the same to manufacture a positive active material layer 22. On the other hand, a coating method is not particularly limited. The coating method may be for example a knife coater method, a gravure coater method, and the like. The below coating process may be performed according to the same method. Subsequently, the positive active material layer 22 is compressed with a press to manufacture a positive electrode 20.

The negative electrode 30 is manufactured according to the same method as that of the positive electrode 20. First, a mixture of a negative active material and a binder for a negative electrode is dispersed in a solvent (for example water) to prepare slurry. Subsequently, the slurry is coated on the negative current collector 31 and dried to form a negative active material layer 32. The drying is desirably performed at a temperature of about 150 °C or greater. Then, the negative active material layer 32 is compressed with a press to manufacture a negative electrode 30.

The poor solvent-containing electrolyte may be prepared as follows. For example, electrolytic salt is dissolved in the first solvent to prepare an electrolyte. Subsequently, the electrolyte is mixed with the second solvent to prepare the poor solvent-containing electrolyte. On the other hand, the method of preparing the electrolyte is not limited to the above method. For example, the electrolytic salt may be dissolved in a mixed solution of the first and second solvents to prepare an electrolyte according to the present embodiment, that is, an electrolyte in which the second solvent is dispersed.

Subsequently, the separator 40 is disposed between the positive electrode 20 and the negative electrode 30 to manufacture an electrode assembly. Then, the electrode assembly is manufactured to have a desired shape (for example, a cylinder, a prism, a laminate, a button, and the like) and then inserted into a container having the same shape. Then, the poor solvent-containing electrolyte is injected into the container in order to impregnate the electrolyte into each pore of the separator 40 to manufacture a lithium ion rechargeable battery.

According to the present embodiment, the viscosity of the electrolyte may be decreased while maintaining the free solvent concentration in the electrolyte at a low level. As a result, a cycle-life may be improved.

Hereinafter, examples of the present invention and comparative examples are described. However, the following examples are only illustrative of the present invention, and the present invention is not limited to the following examples.

### Example 1

### (Manufacture of Lithium Ion Secondary Battery)

In Example 1, the lithium ion secondary battery cell 10 is manufactured by the following processes.

### (Manufacture of Positive Electrode)

As a positive active material, lithium nickel cobalt aluminum oxide represented by LiNi_{0.88}Co_{0.1}Al_{0.02}O₂ was prepared. The positive active material, a carbon powder as a conductive agent, and polyvinylidene fluoride as a binder were mixed in a weight ratio of 94:4:2. N-methyl-2-pyrrolidone was added to the mixture and mixed to prepare positive electrode slurry.

Subsequently, the positive electrode slurry was coated to be 222 long mm and 29 mm wide on one surface of an aluminum foil having a thickness of 12 µm, a length of 238 mm, and a width of 29 mm and in addition, 172 mm long and 29 mm wide on the other surface thereof facing the surface. The positive current collector coated with the positive electrode slurry was dried and then, compressed to manufacture a positive electrode. The positive electrode had a thickness of 125 µm, and the positive active material layer was loaded in an amount of 42.5 mg/cm² on the positive current collector and had filling density of 3.75 g/cm³. Subsequently, the positive electrode was completed by attaching a positive current collector including an aluminum plate having a thickness of 70 µm, a length of 40 mm, and a width of 4 mm was attached to where the positive active material layer was not formed on the positive current collector.

### (Manufacture of Negative Electrode)

As for a negative active material, artificial graphite and silicon-containing carbon were used, and as for a binder, carboxylmethyl cellulose and styrene butadiene rubber were used. The artificial graphite, the silicon-containing carbon, the carboxylmethyl cellulose, and the styrene butadiene rubber were mixed in a weight ratio of 92.2 : 5.3 : 1.0 : 1.5 and then, mixed with water to prepare negative electrode slurry. Subsequently, the negative electrode slurry was coated to be 235 mm wide and 30 mm wide on one surface of a negative current collector including an aluminum foil having a thickness of 8 µm, a length of 271 mm, and a width of 30 mm and then, 178 mm long and 30 mm wide on the other surface of the negative current collector. The negative current collector coated with the negative electrode slurry was dried and compressed to manufacture a negative electrode. Herein, the negative electrode had a thickness of 152 µm, and the negative active material layer was loaded on the negative current collector in an amount of 23.0 mg/cm² and had filling density of 1.6 g/cm³. Then, the negative electrode was completed by attaching a negative current collector including a nickel plate having a thickness of 70 µm, a length of 40 mm, and a width of 4 mm to where the negative active material layer was not formed on the negative current collector.

### (Manufacture of Poor Solvent-Containing Electrolyte)

As for a first solvent, dimethyl carbonate was used, and as for electrolytic salt, LiFSA was used. Subsequently, LiFSA was dissolved to have a concentration of 3.9 M (mol/L) in dimethyl carbonate to prepare an electrolyte. The electrolyte (a 3.9 M (mol/L) LiFSA DMC solution) was mixed with trifluorotoluene as a second solvent in a volume ratio of 50:50 to prepare a poor solvent-containing electrolyte. The poor solvent-containing electrolyte included LiFSA in an apparent concentration of 1.9 M (mol/L) (i.e., a concentration based on an entire volume of the poor solvent-containing electrolyte), and the dimethyl carbonate and the trifluorotoluene were mixed in a ratio of 39:61 (a volume ratio).

### (Measurement of Raman Spectrum of Poor Solvent-Containing Electrolyte)

A Raman spectrum of the poor solvent-containing electrolyte was measured. The Raman spectrum was measured by using NRS-4001 made by JASCO Corporation. The measurement was performed under a condition of an excitation wavelength of 532 nm, 50 times object lens, exposure time of 10 seconds, number of integration of 64, and laser intensity of 5.0 mW. In order to constantly maintain the composition of the poor solvent-containing electrolyte during the measurement, the poor solvent-containing electrolyte was sealed in a quartz closed cell under a dry environment at a dew point of -40 °C.

Subsequently, a peak of the measured Raman spectrum was separated and treated. Specifically, a peak depending on an O-CH₃ stretching vibration of a dimethyl carbonate molecule was observed in a different location depending on a state of dimethyl carbonate. As described above, a peak of a free solvent (so-called free DMC) was found before and after 913 cm⁻¹, a peak of a coordination solvent (so-called coordination DMC) was found in a range of 930 cm⁻¹ to 935 cm⁻¹, and a small peak of trifluorotoluene was found at 920 cm⁻¹. Accordingly, 913 cm⁻¹, 935 cm⁻¹, and 920 cm⁻¹ were used as a central wavelength to separate peaks. The peak separation was performed by using a spectrum interpretation software of 'Spectrum Manager Program' made by JASCO Corporation. A ratio of a Lorenz curve/a Gauss curve ratio was randomly set. Thereby, a peak of the free solvent and a peak of the coordination solvent were specified.

Subsequently, a peak area of the free solvent and a peak area of the coordination solvent were calculated. The peak area indicates an area surrounded by a peak separated by the peak separation and a predetermined baseline. Subsequently, a peak area ratio (%) of the peak area of the free solvent based on a total area of the peak area of the free solvent and the peak area of the coordination solvent was calculated. The peak area ratio of the free solvent was calculated as 3 %.

### (Viscosity)

Subsequently, viscosity of the poor solvent-containing electrolyte was measured in the following method. The viscosity was measured by connecting 'Probe PR-110-L' made by Sekonic Corp. to a vibration viscometer, 'Viscomate VM-100A' made by Sekonic Corp. The viscosity measurement was performed under a dry environment at 23 °C and a dew point of - 40 °C. Probe was dipped in 5 mL of the electrolyte to read a marked scale. Since the marked scale was (viscosity) X (specific gravity) in the VM-100A vibration viscometer, the marked scale was divided by separately measured specific gravity to calculate viscosity (mPa s).

### (Manufacture of Lithium Ion Secondary Battery)

The manufactured positive electrode, negative electrode, and poor solvent-containing electrolyte were used to manufacture a lithium ion secondary battery cell. Specifically, the positive electrode and the negative electrode were disposed to face each other, a separator was interposed therebetween, and then, they were wound and pressed to manufacture a flat electrode assembly. As for the separator, two sheets of 350 mm-long and 32 mm-wide polyethylene porous separator were used. Then, the electrode assembly was put in a battery container made of an aluminum laminate, and the prepared poor solvent-containing electrolyte was put therein. Herein, each current collecting tab of the positive electrode and the negative electrode was taken outside. A design capacity of the battery cell was 480 mAh.

### (Evaluation of Cycle-Life Characteristics)

A cycle-life of the manufactured lithium ion secondary battery cells was evaluated in the following method. The lithium ion secondary battery cells were charged up to a voltage of 4.3 V at a constant current of 48 mA and in addition, up to a current of 24 mA at a constant voltage of 4.3 V at 25 °C. Then, the lithium ion secondary battery cells were discharged at a current of 48 mA up to a voltage of 2.8 V. Herein, discharge capacity of the cells was measured as initial discharge capacity (Q1).

Subsequently, the initially charged and discharged lithium ion secondary battery cells as aforementioned were charged and discharged at 25 °C as follows. In other words, the lithium ion secondary battery cells were charged up to a voltage of 4.3 V at a constant current of 240 mA and in addition, up to a current of 24 mA at a constant voltage of 4.3 V. Then, the lithium ion secondary battery cells were discharged down to a voltage of 2.8 V at a current of 240 mA, of which the charge and discharge as one cycle were 50 times repeated. Then, discharge capacity (Q[0.5C]50) at the 50^{th} charge and discharge cycle was divided by the initial discharge capacity (Q1) to obtain capacity retention (%). The results are shown in Table 1.

### Example 2

A lithium ion secondary battery cell was manufactured according to the same method as Example 1 except that the electrolyte (a 3.9 M (mol/L) LiFSA DMC solution) and the second solvent (trifluorotoluene) were used in a volume ratio of 90:10.

### Example 3

A lithium ion secondary battery cell was manufactured according to the same method as Example 1 except that the electrolyte (a 3.9 M (mol/L) LiFSA DMC solution) and the second solvent (trifluorotoluene) were used in a volume ratio of 80:20.

### Example 4

A lithium ion secondary battery cell was manufactured according to the same method as Example 1 except that the electrolyte (a 3.9 M (mol/L) LiFSA DMC solution) and the second solvent (trifluorotoluene) were used in a volume ratio of 70:30.

### Example 5

A lithium ion secondary battery cell was manufactured according to the same method as Example 1 except that the electrolyte (a 3.9 M (mol/L) LiFSA DMC solution) and the second solvent (trifluorotoluene) were used in a volume ratio of 25:75.

### Example 6

A lithium ion secondary battery cell was manufactured according to the same method as Example 1 except that the electrolyte was adjusted to have an electrolytic salt concentration of 3.0 M (mol/L) (i.e., the electrolyte was a 3.0 M (mol/L) LiFSA DMC solution) and used with the second solvent (trifluorotoluene) in a volume ratio of 50:50.

### Comparative Example 1

A lithium ion secondary battery cell was manufactured according to the same method as Example 1 except that the electrolyte (a 3.9 M (mol/L) LiFSA DMC solution) and the second solvent (trifluorotoluene) were used in a volume ratio of 100:0 (i.e., no second solvent).

### Comparative Example 2

A lithium ion secondary battery cell was manufactured according to the same method as Example 1 except that a 2.0 M (mol/L) LiFSA DMC solution was used instead of the poor solvent-containing electrolyte.

### Comparative Example 3

A lithium ion secondary battery cell was manufactured according to the same method as Example 1 except that the electrolyte (a 3.9 M (mol/L) LiFSA DMC solution) and the second solvent (trifluorotoluene) were used in a volume ratio of 12:88.

### Comparative Example 4

A lithium ion secondary battery cell was manufactured according to the same method as Example 1 except that a 2.8 M (mol/L) LiFSA DMC solution was used as the electrolyte, and this high concentration solution and the second solvent (trifluorotoluene) were used in a volume ratio of 95:5.

**(Table 1)**

| | Area ratio of free solvent | Li salt concentration | Volume ratio of second solvent | Viscosity | Capacity retention |
|---|---|---|---|---|---|
| | (%) | (M (mol/L)) | (volume%) | (mPa·s) | (%) |
| Example 1 | 3 | 1.9 | 61 | 3.8 | 90 |
| Example 2 | 3 | 3.6 | 10 | 22 | 84 |
| Example 3 | 3 | 3.2 | 21 | 15 | 85 |
| Example 4 | 3 | 2.7 | 37 | 10 | 91 |
| Example 5 | 3 | 0.95 | 82 | 1.2 | 83 |
| Example 6 | 15 | 1.5 | 52 | 2.8 | 85 |
| Comparative Example 1 | 3 | 3.9 | 0 | 42 | 79 |
| Comparative Example 2 | 45 | 2 | 0 | 4.5 | 21 |
| Comparative Example 3 | 3 | 0.48 | 93 | 0.9 | 69 |
| Comparative Example 4 | 20 | 2.7 | 6 | 8.5 | 75 |

In Table 1, the ┌Li salt concentration┘ is a concentration (an apparent concentration) based on the entire volume of an electrolyte, and a volume ratio of the second solvent is a ratio (volume%) of the second solvent relative to the entire volume of the first and second solvents.

Examples 1 to 6 all showed low viscosity and high capacity retention. Particularly, when the Li salt concentration was in a range of greater than or equal to 1.7 M (mol/L) and less than or equal to 3.0 M (mol/L) and specifically, greater than or equal to 1.9 M (mol/L) and less than or equal to 2.7 M (mol/L), capacity retention became greater than or equal to 90 %. On the other hand, Comparative Examples 1 to 4 showed no sufficient results. Comparative Example 1 used only the electrolyte and thus showed excessively high viscosity and deteriorated capacity retention. Comparative Example 2 used only the electrolyte having a low concentration and thus showed low viscosity but sharply deteriorated capacity retention. Comparative Example 3 used the electrolyte having a low Li salt concentration and thus showed deteriorated capacity retention. Comparative Example 4 used the free solvent in a large amount and thus showed a high peak area ratio of the free solvent and thus deteriorated capacity retention.

For example, in the above embodiments, the present invention is applied to a lithium ion secondary battery, but the present invention may also be applied to other types of non-aqueous electrolyte secondary batteries.

## Claims

1. A non-aqueous electrolyte for a secondary battery, comprising
an electrolytic salt, a first solvent, and a second solvent,
wherein the electrolytic salt comprises a lithium salt and is included at a concentration of 0.5 M (mol/L) to 3.8 M (mol/L) in the non-aqueous electrolyte,
the first solvent comprises at least one of dimethyl carbonate (DMC), ethyl acetate (EA), methyl propionate (MP), and methyl acetate (MA) and has a solubility of the electrolytic salt ranging from 100 to 400 g dissolved in 100 g of the first solvent at 25°C,
the second solvent comprises at least one of trifluorotoluene (CF₃Ph) and fluorobenzene (FB) and has a solubility of the electrolytic salt of less than or equal to 1 g dissolved in 100 g of the second solvent at 25°C
the first solvent comprises a coordination solvent portion coordinated with an ionized ion from the electrolyte salt and a free solvent portion that is not coordinated with an ionized ion from the electrolyte salt,
**characterized in that**
a peak area ratio of the free solvent portion determined by a Raman spectrum is less than 20 % where the peak area ratio of the free solvent is a ratio of a peak area of the free solvent relative to a total area of a peak area of the free solvent and a peak area of the coordination solvent determined by the Raman spectrum, and the peak area is an area surrounded by a peak separated by peak separation treatment and a predetermined baseline.

2. The non-aqueous electrolyte for a secondary battery of claim 1, wherein the electrolytic salt is included at a concentration of 1.7 M (mol/L) to 3.0 M (mol/L) in the non-aqueous electrolyte.

3. The non-aqueous electrolyte for a secondary battery of claim 2, wherein the electrolytic salt is included at a concentration of 1.9 M (mol/L) to 2.7 M (mol/L) in an electrolyte.

4. The non-aqueous electrolyte for a secondary battery of one of the preceding claims, wherein the free solvent has a peak area ratio of greater than or equal to 3%

5. The non-aqueous electrolyte for a secondary battery of claim 4, wherein the free solvent has a peak area ratio of greater than or equal to 1%.

6. A secondary battery (10) comprising the non-aqueous electrolyte for a secondary battery of one of the preceding claims.

7. The secondary battery (10) according to claim 6, wherein the secondary battery is a lithium ion secondary battery.

## Patentansprüche

1. Nichtwässriger Elektrolyt für eine Sekundärbatterie, umfassend
ein Elektrolytsalz, ein erstes Lösungsmittel und ein zweites Lösungsmittel,
wobei das Elektrolytsalz ein Lithiumsalz umfasst und in einer Konzentration von 0,5 M (mol/L) bis 3,8 M (mol/L) in dem nichtwässrigen Elektrolyten enthalten ist,
das erste Lösungsmittel mindestens eines von Dimethylcarbonat (DMC), Ethylacetat (EA), Methylpropionat (MP) und Methylacetat (MA) umfasst und eine Löslichkeit des Elektrolytsalzes im Bereich von 100 bis 400 g gelöst in 100 g des ersten Lösungsmittels bei 25°C aufweist,
das zweite Lösungsmittel mindestens eines von Trifluortoluol (CF₃Ph) und Fluorbenzol (FB) umfasst und eine Löslichkeit des Elektrolytsalzes von weniger als oder gleich 1 g gelöst in 100 g des zweiten Lösungsmittels bei 25°C aufweist,
das erste Lösungsmittel einen Koordinationslösungsmittelanteil, der mit einem ionisierten Ion des Elektrolytsalzes koordiniert ist, und einen freien Lösungsmittelanteil, der nicht mit einem ionisierten Ion des Elektrolytsalzes koordiniert ist, umfasst,
**dadurch gekennzeichnet, dass**
ein Peakflächenverhältnis des freien Lösungsmittelanteils, bestimmt durch ein Ramanspektrum, weniger als 20 % beträgt, wobei das Peakflächenverhältnis des freien Lösungsmittels ein Verhältnis einer Peakfläche des freien Lösungsmittels relativ zu einer Gesamtfläche des freien Lösungsmittels und einer Peakfläche des Koordinationslösungsmittels, bestimmt durch das Ramanspektrum, ist, und die Peakfläche eine Fläche ist, die von einem Peak umgeben ist, der durch eine Peakabtrennungsbehandlung und eine vorbestimmte Basislinie abgetrennt wurde.

2. Nichtwässriger Elektrolyt für eine Sekundärbatterie nach Anspruch 1, wobei das Elektrolytsalz in einer Konzentration von 1,7 M (mol/L) bis 3,0 M (mol/L) in dem nichtwässrigen Elektrolyt enthalten ist.

3. Nichtwässriger Elektrolyt für eine Sekundärbatterie nach Anspruch 2, wobei das Elektrolytsalz in einer Konzentration von 1,9 M (mol/L) bis 2,7 M (mol/L) in einem Elektrolyten enthalten ist.

4. Nichtwässriger Elektrolyt für eine Sekundärbatterie nach einem der vorhergehenden Ansprüche, wobei das freie Lösungsmittel ein Peakflächenverhältnis von größer als oder gleich 3 % aufweist

5. Nichtwässriger Elektrolyt für eine Sekundärbatterie nach Anspruch 4, wobei das freie Lösungsmittel ein Peakflächenverhältnis von größer oder gleich 1 % aufweist.

6. Sekundärbatterie (10), umfassend den nichtwässrigen Elektrolyten für eine Sekundärbatterie nach einem der vorhergehenden Ansprüche.

7. Sekundärbatterie (10) nach Anspruch 6, wobei die Sekundärbatterie eine Lithiumlonen-Sekundärbatterie ist.

## Revendications

1. Électrolyte non aqueux pour batterie secondaire, comprenant
un sel électrolytique, un premier solvant et un second solvant,
dans lequel le sel électrolytique comprend un sel de lithium et est inclus à une concentration allant de 0,5 M (mol/L) à 3,8 M (mol/L) dans l'électrolyte non aqueux,
le premier solvant comprend au moins l'un parmi le carbonate de diméthyle (DMC), l'acétate d'éthyle (EA), le propionate de méthyle (MP) et l'acétate de méthyle (MA) et a une solubilité du sel électrolytique allant de 100 à 400 g dissous dans 100 g du premier solvant à 25 °C,
le second solvant comprend au moins l'un parmi le trifluorotoluène (CF₃Ph) et le fluorobenzène (FB) et a une solubilité du sel électrolytique inférieure à ou égale à 1 g dissous dans 100 g du second solvant à 25 °C,
le premier solvant comprend une partie de solvant de coordination coordonnée avec un ion ionisé provenant du sel électrolytique et une partie de solvant libre qui n'est pas coordonnée avec un ion ionisé provenant du sel d'électrolyte,
**caractérisé en ce que**
un rapport de surface de pic de la partie de solvant libre déterminé par un spectre de Raman est inférieur à 20 %, où le rapport de surface de pic du solvant libre est un rapport d'une surface de pic du solvant libre par rapport à une surface totale d'une surface de pic du solvant libre et une surface de pic du solvant de coordination déterminée par le spectre de Raman, et la surface de pic est une surface entourée par un pic séparé par un traitement de séparation de pics et une ligne de base prédéterminée.

2. Électrolyte non aqueux pour batterie secondaire selon la revendication 1, dans lequel le sel électrolytique est compris à une concentration allant de 1,7 M (mol/L) à 3,0 M (mol/L) dans l'électrolyte non aqueux.

3. Électrolyte non aqueux pour batterie secondaire selon la revendication 2, dans lequel le sel électrolytique est compris à une concentration allant de 1,9 M (mol/L) à 2,7 M (mol/L) dans un électrolyte.

4. Électrolyte non aqueux pour batterie secondaire selon l'une quelconque des revendications précédentes, dans lequel le solvant libre a un rapport de surface de pic supérieur ou égal à 3 %.

5. Électrolyte non aqueux pour batterie secondaire selon la revendication 4, dans lequel le solvant libre a un rapport de surface de pic supérieur ou égal à 1 %.

6. Batterie secondaire (10) comprenant l'électrolyte non aqueux pour une batterie secondaire selon l'une quelconque des revendications précédentes.

7. Batterie secondaire (10) selon la revendication 6, dans laquelle la batterie secondaire est une batterie secondaire au lithium-ion.
